# EUROPÄISCHE PATENTANMELDUNG

(11) **EP 1 801 694 A2**
(43) Veröffentlichungstag der Anmeldung: **27.06.2007**
(21) Anmeldenummer: 06019382.8
(22) Anmeldetag: 15.09.2006
(51) Int. Cl.: G06F 9/445

(54) **Sicherung eines tragbaren Datenträgers gegen Angriffe**

(30) Priorität: 22.12.2005 DE 102005061659
(71) Anmelder: Giesecke & Devrient GmbH, 81677 München (DE)
(72) Erfinder: Wallhäußer, Curd, 85464 Finsing (DE)

(57) **Zusammenfassung**

Bei einem Verfahren zur Sicherung eines tragbaren Datenträgers gegen Angriffe, die von einem in den Datenträger geladenen Programmpaket (34) ausgehen, wobei das Programmpaket (34) einen Konstantenpool (56) mit einer Mehrzahl von Einträgen (60.i) sowie ausführbaren Code enthält und mindestens ein Programmbefehl (62) des ausführbaren Codes Verweisdaten (66) enthält, die bei einem korrekten Programmpaket einen Eintrag (60.i) im Konstantenpool (56) bezeichnen, wird für zumindest einen Programmbefehl (62), der Verweisdaten (66) enthält, überprüft, ob die Verweisdaten (66) tatsächlich einen Eintrag (60.*i*) im Konstantenpool (56) bezeichnen. Durch die Erfindung wird die Sicherheit des Datenträgers gegen Angriffe beträchtlich gesteigert.

## Beschreibung

Die Erfindung betrifft allgemein das technische Gebiet der Sicherung von tragbaren Datenträgern gegen Angriffe, die von einem in den Datenträger geladenen Programmpaket ausgehen. In der Wortwahl des vorliegenden Dokuments kann ein tragbarer Datenträger beispielsweise eine Chipkarte (*Smart Card*) oder ein Chipmodul (*Smart Token*) in unterschiedlichen Bauformen oder ein vergleichbares ressourcenbeschränktes System sein.

Tragbare Datenträger werden häufig für sicherheitskritische Anwendungen eingesetzt, z.B. zur Autorisierung von Finanztransaktionen oder zur Verschlüsselung oder elektronischen Signatur von Dokumenten. Daher besteht ein Bedürfnis, tragbare Datenträger möglichst umfassend gegen Angriffe zu schützen.

Das Buch *"*Java Card™ Technology for Smart Cards" von Zhiqun Chen, Addison-Wesley, Juni 2000, beschreibt in Kapitel 11 auf den Seiten 151 - 163 Sicherheitsaspekte der *Java-Card*-Plattform. Eine eingehendere Darstellung der für die vorliegende Erfindung relevanten Sicherheitseigenschaften findet sich in dem Artikel *"*Formal Model and Implementation of the Java Card Dynamic Security Policy" von Stéphanie Motré, in Approches Formelles dans l'Assistance au Développement de Logiciels (AFADL), Grenoble, Frankreich, Januar 2000.

Aus der DE 103 49 200 ist ein Verfahren zur dynamischen Überwachung des Adreßraumes eines Stacks bekannt, das sicherstellt, daß aus einen Prozeß aufgerufene nachgelagerte Prozesse, z.B. Unterprogramme, nicht auf gesperrte, dem übergeordneten Prozeß zugeordnete Adreßbereiche zugreifen können. Erreicht wird dies, indem in einem separaten Stack die jeweils gültige Untergrenze des für einen Prozeß erreichbaren Stackadreßraumes bei jedem Aufruf eines neuen Prozesses ebenfalls neu festgelegt wird. Das Verfahren verhindert bei der Ausführung von verschachtelt strukturierten Programmen Fehler, die durch dadurch bedingt sind, daß Daten fälschlich überschrieben oder ungelöscht hinterlassen wurden.

Die Erfindung hat die Aufgabe, die Sicherheit von tragbaren Datenträgern gegen Angriffe, die von einem in den Datenträger geladenen Programmpaket ausgehen, zu erhöhen.

Erfindungsgemäß wird diese Aufgabe ganz oder zum Teil gelöst durch ein Verfahren zur Sicherung eines tragbaren Datenträgers gemäß Anspruch 1, ein Computerprogrammprodukt gemäß Anspruch 11 und eine Vorrichtung gemäß Anspruch 12. Die abhängigen Ansprüche definieren optionale Merkmale mancher Ausgestaltungen der Erfindung.

Die Erfindung geht von der Erkenntnis des Erfinders aus, dass bei Datenträgern nach dem Stand der Technik ein angreifendes Programmpaket in den Datenträger eingelesen werden kann, das beliebigen Code eines angegriffenen Programmpakets ausführt, obwohl dies der Sicherheitsphilosophie des Datenträgers widerspricht. Zur Abwehr derartiger Angriffe wird erfindungsgemäß überprüft, ob Verweisdaten in zumindest einem Programmbefehl eines auszuführenden Programmpakets einen Eintrag in einem Konstantenpool - und nicht etwa einen irregulären, nicht im Konstantenpool befindlichen Eintrag - bezeichnen.

Durch die Erfindung können Angriffe der genannten Art mit geringem Aufwand vermieden werden. Die Sicherheit des Datenträgers wird dadurch beträchtlich gesteigert.

In manchen Ausführungsformen der Erfindung ist der Datenträger gemäß der *Java-Card*-Spezifikation ausgestaltet. Hierunter werden die drei Dokumente "*Runtime Environment Specification - Java Card*™ *Platform, Version 2.2.1*", "*Virtual Machine Specification* - *Java Card*™ *Platform, Version 2.2.1*" und "*Application Programming Interface* - *Java Card*™ *Platform, Version 2.2.1*", herausgegeben von der Firma Sun Microsystems, Inc., Santa Clara, Kalifornien, USA, Oktober 2003, verstanden. Der Inhalt dieser Dokumente wird hiermit in die vorliegende Beschreibung aufgenommen.

Das erfindungsgemäße Computerprogrammprodukt weist Programmbefehle auf, um das erfindungsgemäße Sicherungsverfahren zu implementieren. Das Computerprogrammprodukt kann ein körperliches Medium sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Das Computerprogrammprodukt ist insbesondere zur Verwendung bei der Herstellung oder Initialisierung oder Personalisierung oder Wartung des Datenträgers vorgesehen.

Weitere Merkmale, Vorteile und Aufgaben der Erfindung gehen aus der folgenden genauen Beschreibung mehrerer Ausführungsbeispiele und Ausführungsalternativen hervor. Es wird auf die schematischen Zeichnungen verwiesen, in denen zeigen:
Fig. 1 ein Blockdiagramm mit Funktionseinheiten eines tragbaren Datenträgers nach einem Ausführungsbeispiel der Erfindung,
Fig. 2 eine schematische Darstellung des Vorgangs der Programmerzeugung und des Ladens von Programmpaketen in einen tragbaren Datenträger, und
Fig. 3 eine schematische Darstellung von Programmpaket-Komponenten und eines Überprüfungsschritts.

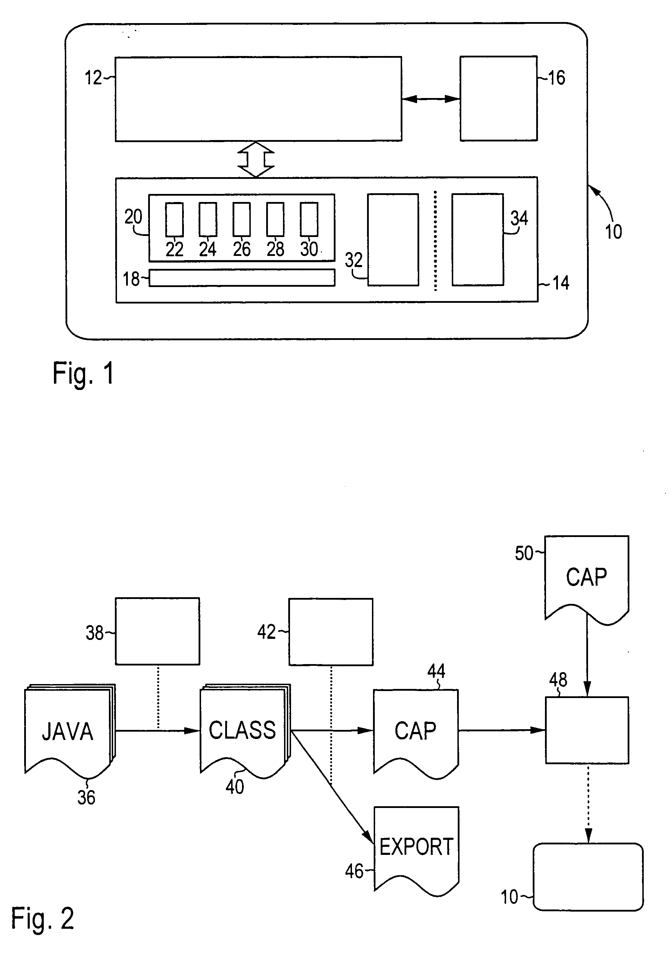

Der in Fig. 1 dargestellte Datenträger 10 ist im vorliegenden Ausführungsbeispiel als Chipkarte gemäß dem *Java-Card*-Standard ausgestaltet. Der Datenträger 10 weist auf einem einzigen Halbleiterchip einen Prozessor 12, einen Speicher 14 und eine Schnittstellenschaltung 16 zur kontaktlosen oder kontaktgebundenen Kommunikation auf. In an sich bekannter Weise ist der Speicher in mehrere Speicherfelder aufgeteilt, die in unterschiedlichen Technologien - z.B. als RAM, ROM und EEPROM - ausgestaltet sind.

Im Speicher 14 sind hardwarenahe Systemroutinen 18 und eine Laufzeitumgebung 20 enthalten. Die Laufzeitumgebung 20 ist im vorliegenden Ausführungsbeispiel als *Java-Card*-Laufzeitumgebung (JCRE = *Java Card Runtime Environment*) gemäß der bereits erwähnten *Java-Card*-Spezifikation ausgestaltet. Bestandteile der Laufzeitumgebung 20 sind eine virtuelle *Java-Card-*Maschine 22 (JCVM = *Java Card Virtual Machine*), eine Klassenbibliothek 24, die eine Anwendungsprogrammierschruttstelle (API = *Application Programming Interface*) bereitstellt, sowie ein Lademodul 26, ein Linker 28 und eine Firewall 30.

Unter Steuerung der Laufzeitumgebung 20 vermag der Datenträger 10 mehrere Programmpakete 32, 34 (*Packages*) auszuführen. Jedes Programmpaket 32, 34 enthält ein oder mehrere Applets, die insgesamt ein auch als Applikation bezeichnetes Anwendungsprogramm bilden. Jedes Programmpaket 32, 34 wird in einem eigenen Kontext ausgeführt. Kontextübergreifende Zugriffe sind nur unter bestimmten Voraussetzungen zulässig, z.B. wenn ein Objekt eines Programmpakets 32, 34 als gemeinsam nutzbares Objekt (*Shareable Object*) definiert ist. Durch die Firewall 30 soll die Einhaltung aller Zugriffsbeschränkungen sichergestellt werden. Dies ist aber, wie unten noch genauer erläutert werden wird, bei Datenträgern nach dem Stand der Technik nicht immer gewährleistet.

Fig. 2 stellt schematisch den Vorgang der Programmerzeugung dar, der mit der Übersetzung eines oder mehrerer *Java*-Quellprogramme 36 durch einen Compiler 38 in eine oder mehrere Klassendateien 40 beginnt. Ein Verifikator und Konverter 42, der auch als "*Off-Card Virtual Machine*" bezeichnet wird, überprüft die Klassendateien 40 und wandelt sie in eine CAP-Datei 44 (CAP = *Converted Applet*) sowie gegebenenfalls eine Exportdatei 46 um.

Die CAP-Datei 44 enthält ein Programmpaket - z.B. 32 - in einem Ladeformat. Die CAP-Datei 44 ist in mehrere Komponenten gegliedert, unter anderem eine Konstantenpool-Komponente, eine Klassenkomponente, eine Methodenkomponente und eine Komponente für statische Felder. Die Konstantenpool-Komponente enthält Referenzen auf Elemente anderer Komponenten der CAP-Datei 44. Diese Referenzen können als Token oder als Offset-Werte angegeben sein.

Über ein außerhalb des Datenträgers 10 befindliches Ladeprogramm 48, das mit dem internen Lademodul 26 kooperiert, wird die CAP-Datei 44 in den Speicher 14 des Datenträgers 10 geladen und dort als Programmpaket - z.B. 32 - angelegt. In manchen Ausführungsformen führt das Ladeprogramm 48 eine kryptographische Authentisierung durch, bevor die CAP-Datei 44 in den Datenträger 10 geladen wird. Die *Java-Card*-Spezifikation enthält hierzu jedoch keine Anforderungen. Es besteht daher das Risiko, dass ein Angreifer eine irreguläre CAP-Datei 50 in den Datenträger 10 einspielt.

Im folgenden soll angenommen werden, dass die reguläre CAP-Datei 44 das Programmpaket 32 definiert, während die irreguläre CAP-Datei 50 das Programmpaket 34 definiert. Es ist dann, wie noch genauer beschrieben werden wird, ein Angriff des Programmpakets 34 ("angreifendes Programmpaket") gegen das Programmpaket 32 ("angegriffenes Programmpaket") möglich.

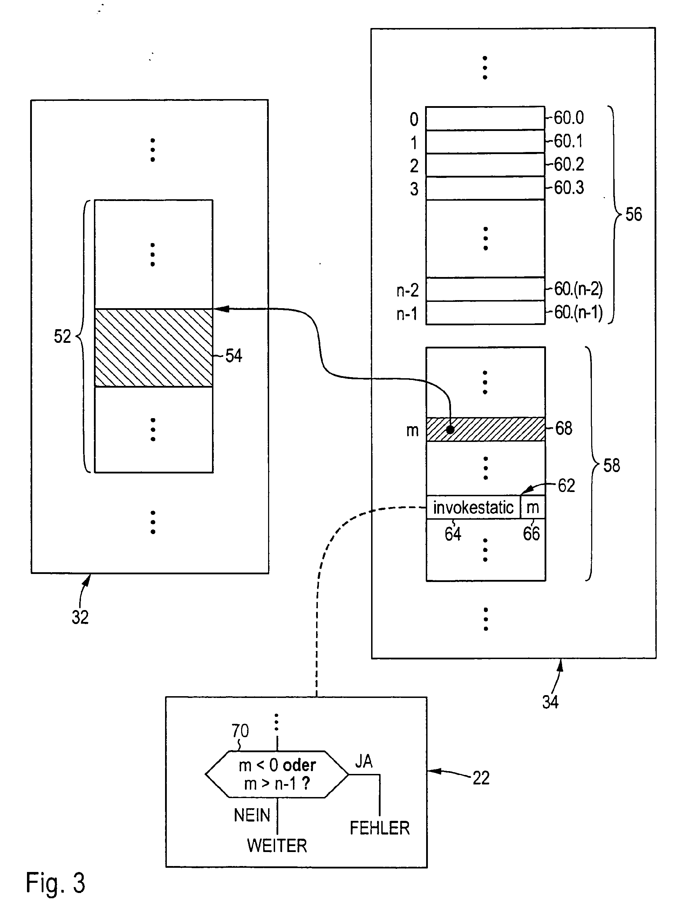

Fig. 3 zeigt Teile des angegriffenen Programmpakets 32 und des angreifenden Programmpakets 34, wie sie sich nach dem Laden der beiden CAP-Dateien 44, 50 im Speicher 14 des Datenträgers 10 befinden. Eine Methodenkomponente 52 des angegriffenen Programmpakets 32 weist eine virtuelle Methode 54 auf. Es ist Ziel des Angriffs, diese Methode 54 bei der Ausführung des angreifenden Programmpakets 34 unberechtigt auszuführen. Das angreifende Programmpaket 34 enthält einen Konstantenpool 56 und eine Methodenkomponente 58. Die Programmpakete 32, 34 weisen weitere an sich bekannte Komponenten auf, die in Fig. 3 zur klareren Darstellung nicht gezeigt sind.

In dem Konstantenpool 56 des angreifenden Programmpakets 34 befinden sich *n* Einträge 60.0, 60.1, ..., 60.(*n*-1), die im folgenden zusammenfassend mit 60.*i* bezeichnet werden. Auf die Einträge 60.*i* wird über Indexwerte zugegriffen; beispielsweise bezeichnet der Indexwert 0 den Eintrag 60.0, und der Indexwert *n*-1 bezeichnet den Eintrag 60.(*n*-1). Die Einträge 60.*i* im Konstantenpool 56 enthalten Referenzen, die auf Klassen, Methoden oder Felder verweisen.

Beim Laden der CAP-Datei 50 in den Datenträger 10 werden die Einträge 60.*i* des Konstantenpools 56 vom Linker 28 in ihrer endgültigen Form erzeugt, wobei Referenzen aufgelöst und gegebenenfalls verifiziert werden. Auch wenn die CAP-Datei 50 manipuliert ist, wird dennoch sichergestellt, dass der Konstantenpool 56 des im Speicher 14 angelegten Programmpaktes 34 keine unzulässigen Referenzen auf andere Programmpakete - z.B. das Programmpaket 32 - enthält.

Die Methodenkomponente 58 des angreifenden Programmpakets 34 weist eine Vielzahl von Programmbefehlen auf, die als *Bytecode* zur Ausführung durch die virtuelle *Java-Card*-Maschine 22 vorgesehen sind. Einer dieser Programmbefehle ist in Fig. 3 mit dem Bezugszeichen 62 gezeigt. Es handelt sich um einen Befehl zum Aufruf einer statischen Methode (Klassenmethode). Der Programmbefehl 62 besteht aus dem Befehlscode 64 "*invokestatic*" und Verweisdaten 66. Die Verweisdaten 66 geben einen Indexwert *m* an, der bei einem korrekten Programmpaket 34 einen der Einträge 60.*i* im Konstantenpool 56 bezeichnen würde. Mit anderen Worten würde bei einem korrekten Programmpaket 34 der durch die Verweisdaten 66 angegebene Indexwert *m* stets zwischen 0 und *n*-1 liegen.

Der Erfinder hat jedoch erkannt, dass die Einhaltung der gerade genannten Eigenschaft 0 *≤ m* ≤ *n*-1 bei *Java-Card*-Architekturen nach dem Stand der Technik nicht überwacht wird. In der in Fig. 3 gezeigten Konstellation ist das angreifende Programmpaket 34 irregulär in dem Sinne, dass der durch die Verweisdaten 66 angegebene Indexwert *m* nicht auf einen der Einträge 60.*i* im Konstantenpool 56, sondern auf einen vom Angreifer erzeugten Eintrag 68 verweist. Dieser Eintrag 68 wird auch als "irregulärer Eintrag" bezeichnet, weil er zwar wie ein regulärer Eintrag 60.*i* formatiert ist, aber nicht im Konstantenpool 56 enthalten ist. In Fig. 3 ist der irreguläre Eintrag 68 beispielhaft in der Methodenkomponente 58 gezeigt; es ist jedoch auch möglich, dass ein Angreifer eine andere Komponente des angreifenden Programmpakets 34 als Speicherort für den irregulären Eintrag 68 nutzt.

Wie bereits beschrieben, verhindert der Linker 28 beim Laden der CAP-Datei 50, dass unzulässige Einträge 60.i im Konstantenpool 56 angelegt werden. Der irreguläre Eintrag 68 unterliegt dieser Kontrolle jedoch nicht, weil er nicht in der Konstantenpool-Komponente der irregulären CAP-Datei 50 definiert ist und somit nicht durch den Linker 28 verifiziert wird. Der Angreifer kann daher in der CAP-Datei 50 einen irregulären Eintrag 68 mit beliebigen Referenzen und Zeigerwerten definieren, der beim Laden der CAP-Datei 50 im Speicher 14 angelegt wird. In dem Beispiel von Fig. 3 adressiert der irreguläre Eintrag 68 unmittelbar die virtuelle Methode 54 des angegriffenen Programmpakets 32.

Eine virtuelle *Java-Card*-Maschine nach dem Stand der Technik würde bei der Ausführung des Programmbefehls 62 gemäß den Verweisdaten 66 auf den irregulären Eintrag 68 zugreifen, da sich dieser Eintrag 68 relativ zum Konstantenpool 56 an der Indexposition *m* befindet. Wie durch den Befehlscode 64 "*invokestatic*" angegeben, würde die virtuelle *Java-Card*-Maschine nach dem Stand der Technik dann die virtuelle Methode 54, auf die der irreguläre Eintrag 68 zeigt, unmittelbar als statische Methode aufrufen. Dieser kontextübergreifende Methodenaufruf würde durch die Firewall 30 nicht verhindert werden, weil gemäß der *Java-Card*-Spezifikation Aufrufe von statischen Methoden nicht der Firewall-Überprüfung unterliegen. Insgesamt kann der Angreifer somit Code fremder Programmpakete anspringen und ausführen, als ob es Code einer statischen Methode wäre.

Bei der vorliegenden Erfindung wird das gerade beschriebene Angriffsszenario dadurch verhindert, dass ein Überprüfungsschritt 70 ausgeführt wird, in dem irreguläre Einträge 68 erkannt werden. Die Überprüfung in Schritt 70 wird in der Regel zeitlich vor der Ausführung des entsprechenden Programmbefehls 62 vorgenommen.

In dem hier beschriebenen Ausführungsbeispiel wird bei dem Überprüfungsschritt 70 überprüft, ob die Verweisdaten 66 eines Programmbefehls 62, die nach der *Java-Card*-Spezifikation einen Eintrag 60.i im Konstantenpool 56 bezeichnen sollten, dies auch tatsächlich tun. Hierzu wird gemäß Fig. 3 verglichen, ob der durch die Verweisdaten 66 angegebene Indexwert *m* entweder kleiner als 0 oder größer als *n*-1 ist. Ist dies der Fall, so liegen unzulässige Verweisdaten 66 vor. In unterschiedlichen Ausgestaltungen wird dann die Ausführung des Programmpakets 34 abgebrochen oder der Datenträger 10 insgesamt gesperrt. Wenn dagegen der durch die Verweisdaten 66 angegebene Indexwert in dem zulässigen Intervall von 0 bis *n* -1 liegt, so wird die Programmausführung fortgesetzt.

In dem in Fig. 3 gezeigten Ausführungsbeispiel erfolgt die gerade beschriebene Überprüfung zur Laufzeit der auf dem Datenträger 10 ausgeführten Programmpakete 32, 34. Es wird vor jedem Zugriff auf einen Eintrag 60.*i*, der sich nach der *Java-Card*-Spezifikation im Konstantenpool - z.B. 56 - befinden sollte, ein Überprüfungsschritt 70 ausgeführt. Der Überprüfungsschritt 70 ist dann, wie in Fig. 3 gezeigt, Bestandteil der virtuellen *Java-Card*-Maschine 22.

In Ausführungsalternativen ist dagegen vorgesehen, dass die erfindungsgemäße Überprüfung im Zusammenhang mit dem Laden einer CAP-Datei 44, 50 in den Datenträger 10 stattfindet. Der Überprüfungsschritt 70 wird dann für jeden in der CAP-Datei 44, 50 definierten Programmbefehl 62, soweit dieser Verweisdaten 66 enthält, ausgeführt. Der Überprüfungsschritt 70 kann in diesen Ausgestaltungen z.B. Bestandteil des Lademoduls 26 sein.

Es versteht sich, daß die in der obigen Beschreibung von Ausführungsbeispielen enthaltenen Einzelheiten nicht als Einschränkungen des Schutzbereichs der Erfindung aufgefaßt werden sollen. Viele Abwandlungen und weitere Ausgestaltungen sind möglich und für den Fachmann offensichtlich. Der Schutzbereich der Erfindung soll daher nicht durch die obigen Ausführungsbeispiele, sondern durch die folgenden Ansprüche bestimmt werden.

## Patentansprüche

1. Verfahren zur Sicherung eines tragbaren Datenträgers (10) gegen Angriffe, die von einem in den Datenträger (10) geladenen Programmpaket (34) ausgehen, wobei das Programmpaket (34) einen Konstantenpool (56) mit einer Mehrzahl von Einträgen (60.*i*) sowie ausführbaren Code enthält und mindestens ein Programmbefehl (62) des ausführbaren Codes Verweisdaten (66) enthält, die bei einem korrekten Programmpaket einen Eintrag (60.*i*) im Konstantenpool (56) bezeichnen,
**dadurch gekennzeichnet, dass** für zumindest einen Programmbefehl (62), der Verweisdaten (66) enthält, überprüft wird, ob die Verweisdaten (66) tatsächlich einen Eintrag (60.*i*) im Konstantenpool (56) bezeichnen.

2. Verfahren nach Anspruch 1, **dadurch gekennzeichnet, dass** der Programmbefehl (62) nicht ausgeführt wird, wenn sich bei der Überprüfung ergibt, dass die Verweisdaten (66) einen nicht im Konstantenpool (56) befindlichen Eintrag (68) bezeichnen.

3. Verfahren nach Anspruch 1 oder Anspruch 2, **dadurch gekennzeichnet, dass** ein Überprüfungsschritt (70) ausgeführt wird, in dem festgestellt wird, ob sich ein durch die Verweisdaten (66) angegebener Wert in einem zulässigen Intervall befindet.

4. Verfahren nach einem der Ansprüche 1 bis 3, **dadurch gekennzeichnet, dass** für jeden Programmbefehl (62), der Verweisdaten (66) enthält, überprüft wird, ob die Verweisdaten (66) tatsächlich einen Eintrag (60.*i*) im Konstantenpool (56) bezeichnen.

5. Verfahren nach einem der Ansprüche 1 bis 4, **dadurch gekennzeichnet, dass** der ausführbare Code in einer Methodenkomponente (58) des Programmpakets (34) enthalten ist.

6. Verfahren nach einem der Ansprüche 1 bis 5, **dadurch gekennzeichnet, dass** der ausführbare Code *Java Bytecode* ist.

7. Verfahren nach Anspruch 6, **dadurch gekennzeichnet, dass** der Programmbefehl (62) einen "invokestatic"-Befehlscode (64) aufweist.

8. Verfahren nach einem der Ansprüche 1 bis 7, **dadurch gekennzeichnet, dass** der Datenträger (10) gemäß der *Java*-*Card-*Spezifikation ausgestaltet ist.

9. Verfahren nach einem der Ansprüche 1 bis 8, **dadurch gekennzeichnet, dass** die Überprüfung zur Laufzeit des Programmpakets (34) erfolgt.

10. Verfahren nach einem der Ansprüche 1 bis 8, **dadurch gekennzeichnet, dass** die Überprüfung im Zusammenhang mit dem Laden des Programmpakets (34) in den Datenträger (10) erfolgt.

11. Computerprogrammprodukt, das Programmbefehle aufweist, die einen Prozessor (12) zur Ausführung eines Verfahrens nach einem der Ansprüche 1 bis 10 veranlassen.

12. Vorrichtung, insbesondere tragbarer Datenträger (10), mit einem Prozessor (12) und mindestens einem Speicher (14), wobei der Speicher (14) Programmbefehle enthält, die den Prozessor (12) zur Ausführung eines Verfahrens nach einem der Ansprüche 1 bis 10 veranlassen.
